# EUROPEAN PATENT APPLICATION

(11) **EP 3 471 358 A1**
(43) Date of publication of application: **17.04.2019**
(21) Application number: 17196399.4
(22) Date of filing: 13.10.2017
(51) Int. Cl.: H04L 27/00, H04L 27/14

(54) **AMI SYSTEM WITH LINK BUDGET DYNAMICS**

(71) Applicant: Kamstrup A/S, 8660 Skanderborg (DK)
(72) Inventor: Christiansen, Johnny Dørken, 8464 Galten (DK); Hald, Flemming, 8370 Hadsten (DK); Thomsen, Troels Pil, 8450 Hammel (DK); Hofni, Jeppe, 8000 Aarhus C (DK)
(74) Representative: Plougmann Vingtoft a/s

(57) **Abstract**

The invention is directed to an Advanced Metering Infrastructure (AMI) in which utility meters and data collectors communicate utility data and other relevant information to and from utility meters. The devices participating in the AMI use RF communication nodes comprising means for two-way communication using standard of the shelf low cost transceivers. The need for link budget dynamics in AMI systems is met by the disclosed method of seamless changing between reception of M-ary modulated RF signals with different values of M. The MCU analyses the received data bits to determine the correct value of M and converts the received data bits to the data bits corresponding to the correct value of M

## Description

### FIELD OF THE INVENTION

The present invention relates to the field of Advanced Metering Infrastructures (AMI) in particular two-way AMI systems using RF communication technologies.

### BACKGROUND OF THE INVENTION

Advanced Metering Infrastructures (AMI) are systems designed for communication with utility meters such as water meters, district heating meters, gas meters and electricity meters. The AMI systems have evolved over the years to become two-way communication systems with increasing requirements to the amount of data transferred between meters and headend systems. The AMI systems are used for transferring consumption related data from the meter to the headend system as well as to send data from the headend system to the meters. Data read from the meters are typical consumption values like volume registers for a volume meter or energy registers for an energy meter. The reading can be single data points sampled at a specific time point or time series of data for establishing a consumption profile. Other types of data obtained from sensors integrated in the meters or data obtained by processing meter data within the meter might be sent from the meter as well. Such other data could be temperature, pressure and quality information related to the delivered utility or it could be values obtained by applying mathematical functions e.g. averaging or integration to the measured data. Data sent from the headend system to the meters include commands for special operations such as opening or closing of valves or breakers integrated in the meter, reconfiguration of the meter or even longer communication sessions for updating the firmware of the meters, the latter requiring the transmission of substantial amounts of data.

AMI system make use of different communication medias such as radio channels or communication over power lines or other wired communication mediums. AMI systems using radio channels as the communication channel are very common and has the advantage that they do not rely on the presence of other communication medias, such as wires. The utility meters are often battery operated meters installed in positions requiring very high RF link budgets to obtain a successful communication session. The meters might be installed in deep indoor positions such as basements or technique compartments of the buildings. Especially water meters are often installed below ground level e.g. in meter pits. These kind of installation positions requires a high link RF budget for the AMI system to perform satisfying. To obtain a high link budget a long transmission duration is normally required due to the use of narrow band RF channels or spread spectrum techniques. Examples of such systems using long transmission duration to obtain a high link budget is Sigfox and LORA systems. The draw backs of long transmission duration is increased energy consumption in the meters and increased congestion in the communication channel. These drawbacks in combination with the limited energy budget in battery operated meters and the high number of deployed devices will significantly limit the performance of the AMI system.

To overcome these limitations an AMI system including means for controlling the link budget is required. Some systems like Sigfox use a constant high link budget while other systems like LORA uses a dynamically adjusted link budget. In such a system using a dynamically adjusted link budget only meters requiring a high link budget utilize long transmission durations. This is achieved by requesting the meter to reduce the link budget when the path loss between the meter and the data collecting unit allows for it. In order to achieve a dynamic and symmetric link budget it is thus required that the meter has the ability to dynamically adjust the link budget of the receiver as well as the transmitter.

Reduction of link budget can be done by increasing data rate or decreasing coding rate / spreading rate or adjusting other RF parameters e.g. the type of modulation used. Doing so it is however required to send a command to the meter requesting the change or even start a negotiation process agreeing on the future communication parameters. IEEE 802.15.4 is an example of a protocol using mode-switch packet to control the communication setup.

The overhead induced by transmitting commands requesting the change of link budget or negotiation of a new communication setup is undesired. This is especially the case in an AMI, in which only a limited amount of data is transferred for each communication session, in order to limit energy consumption in battery operated meters and congestion of the communication channel. Additional communication with the single purpose of adjusting the link budget would thus increases energy consumption and congestion in the communication channels significantly.

Using modern high end radios like Software Defined Radios (SDR) a number of ways of adjusting the link budget is available. SDR's are capable of receiving multiple radio channels using different modulation forms simultaneously. Meters are however produced in high numbers and are very price sensitive, low cost standard single chip transceivers are thus normally used in the meters. This type of radio have limited functionalities, and means for adjusting the link budget might not be available or at least very limited. Simultaneously reception of multiple channel using different modulation forms are not available in low cost transceivers.

Means for seamless adjusting the link budget especially in the direction from the data collecting unit to the meter are thus needed to overcome these obstacles.

### OBJECT OF THE INVENTION

The object of the invention is to provide a dynamic link budget and a solution for seamless change of link budget and communication parameters in an AMI system without adding additional cost in the form of additional RF transmissions or advanced RF HW in the communication nodes of metering points.

### SUMMARY OF THE INVENTION

In a first aspect the disclosed apparatus is a communication node for communicating data to and from utility meters in an Advanced Metering Infrastructure (AMI), the communication node comprising; a radio including a transmitter and a receiver, a Micro Controller Unit (MCU) for controlling the radio, wherein the MCU is adapted to; setup the radio to operate in a RF communication channel, request the receiver of the radio to start reception of M-ary modulated RF signals where M=K and generate demodulated data bits, receive from the radio the demodulated data bits, characterized in the MCU is configured to; analyse the demodulated data bits to determine if M of the received RF signal is K or L where K > L, if M of the received RF signal is determined to be K use the demodulated data bits as received from the radio for further processing, if M of the received RF signal is determined to be L convert the demodulated data bits to data bits of a L-ary modulated signal before further processing.

A communication node might be an integrated device in a host device such as a utility meter, repeater or Data Collector Unit (DCU) taking part in the AMI. The communication node might share several elements with the host device such as power supply, MCU, communication and configuration interfaces etc. The communication node might share printed circuit board with the host device or it can be a separate module mounted within the host device. In other embodiments the communication node is an independent unit not sharing any HW with utility meter but communicating to the host device using a wired or wireless communication interface. Communication nodes possessing different functionality and cost may be optimal for different units in the AMI system.

The micro controller unit can take the form of a standard microprocessor but other solutions is applicable as well such as an FPGA solution or even a Digital Signal Processor (DSP). The radio might be a separate RF transmitter and receiver or a combined transceiver, the radio might include external Low Noise Amplifiers and Power Amplifiers. The radio might be embedded with the MCU in a single component. M-ary modulation is construed as any modulation scheme in which the number of symbols are defined by M. M-ary modulation can use frequency shift keying (FSK), Phase Shift Keying (PSK), Amplitude Shift keying (ASK), combinations of those or other modulation types. Requesting the receiver to receive M-ary signals with M=K implies that the receiver is configures to receive a RF signal with K symbols using an appropriate demodulator, identifying the RF symbols and generating resulting data bits. The demodulated data bits are thus the data bits as they are outputted from the receiver. The demodulated data bits can be analysed by the MCU applying algorithms to the demodulated data bits or simply by recognizing known patterns in the demodulated data bits. Analysing can thus be construed as simply comparing the demodulated data bits to a predetermined pattern. Analysing the demodulated data bits to determine M of the received RF signal may result in M being determined to be K which is corresponding to the configuration of the receiver or M is determined to be a value L different from K and belonging to a range of valid values for L. Thus L is different from K and L is determined to be one of a range of values. An example of such a range of valid values for L could be 2, 4, 8 for K = 16. Converting the demodulated data bits to the data bits of an L-ary modulated signal implies recovering the data bits as they were modulated into the transmitted RF signal, however not necessarily being able to compensate all error induced in the communication chain. Thus after determining the value of L the demodulated data bits is converted to the data bits corresponding to the RF signal being L-ary modulated. Further processing of the data bits might may include applying different algorithms such as Forward Error Correction (FEC) algorithms, using spread spectrum techniques or other coding techniques. Further processing might also include parsing of protocol layers, applying cryptographic methods and other elements commonly known from communication protocol stacks or simply interpreting the received data.

Communication nodes wherein the modulation used is Frequency Shift Keying (FSK) or Gaussian shaped FSK (GFSK) are applicable for applying the disclosed method, however various other types of modulation may be used. The G denoting Gaussian shaping might be used in some embodiments but is not required in disclosed embodiments.

The MCU is configured to determine if the received RF signal is a K-ary or L-ary modulated RF signal by use of statistical methods. The statistical methods are applied directly to the received data bits or the data bits converted into symbols. Statistical methods might be understood as calculating values such as averages, variances, standard deviations etc. Statistical methods could also be analysing the distribution of symbols, meta data or other values by use of histograms of probability density functions.

The RF receiver might, if this is beneficial for the receiver, be setup to synchronize on a synchronization word where all symbols are the outer symbols of a K-ary FSK modulated signal. Outer symbols is in a FSK context understood as the two symbols with the maximum deviation from the centre frequency. Using other modulations than FSK, the outer symbols should be construed as symbols present in all M-ary modulations used and preferably the symbols with the largest distance in between them in the constellation diagram.

In a M-ary FSK context using the values of M=2 and M=4 an example of such a setup is a RF receiver which is setup to synchronize on a synchronization word where all symbols are the outer symbols (A, D) of the 4-ary FSK modulated signal.

For a FSK system the receiver must be setup to receive a RF signal with a specific deviation an example of this is a RF receiver which is setup to receive a 4-ary FSK modulated signal wherein the deviation of the outer symbols (A, D) are +/- f_{dev} and the deviation of the inner symbols (B, C) are +/- 1/3* f_{dev}. In this way the minimum distance in the frequency domain between two symbols is 2/3* f_{dev}.

In an embodiment the communication node is configured for being a node in a mesh network and L-ary modulation is used in case of retransmission of a routed data frame. Further if a communication node is configured for being a node in a mesh network the decision of transmitting using K-ary or L-ary modulation might be made in accordance with a retransmission scheme. A communication node in a mesh network might have router functionality and does thus have to make decisions regarding how to forward a routed data packet. To support such decisions the communication node might consult a retransmission scheme defining the parameters for routing and retransmitting data frames, such parameters could include the link budget to be provided for the data transfer. The decision of transmitting using K-ary or L-ary modulation might be made for each hop, at least based on statistics of historical communication errors. The decision of transmitting using K-ary or L-ary modulation is made for each hop by the transmitting node. The node might however have been configured to follow specific rules when routing data frames or it might have been supplied with additional information or instructions supporting the decision. One way of implementing the invention is a FSK based system using M=4 and M=2 implementing communication nodes for communicating data to and from a utility meter in an Advanced Metering Infrastructure (AMI) comprising; a radio including a transmitter and a receiver, a Micro Controller Unit (MCU) for controlling the radio,
wherein the MCU is adapted to; setup the radio to operate in a RF communication channel, request the receiver of the radio to start reception of 4-ary modulated RF signals and generate demodulated data bits, receive from the radio the demodulated data bits, characterized in, the MCU is configured to; analyse the received demodulated data bits to determine if the received RF signal is a 4-ary or 2-ary modulated RF signal, if the received RF signal is determined to be 4-ary modulated use the demodulated data bits as received from the radio for further processing, if the received RF signal is determined to be 2-ary modulated convert the received demodulated data bits to the data bits as modulated in the received 2-ary signal before further processing.

### BRIEF DESCRIPTION OF THE FIGURES

Figure 1 shows an Advanced Metering Infrastructure using a star topology. Connection to the headend system through the internet is illustrated as well,
Figure 2 illustrates the mapping of 2-FSK and 4-FSK symbols in the frequency domain,
Figure 3 shows an example of a data frame and the symbols used in the different parts of the frame for a 2-FSK and a 4-FSK modulation,
Figure 4 shows the mapping between symbols and data bits for 2-FSK and 4-FSK,
Figure 5 shows the mapping of 4-FSK symbols into equivalent 2-FSK data bits
Figure 6 shows a RF mesh network with utility meters arranged in a multi hop network. Connection to the headend system through the internet is illustrated as well, and
Figure 7 illustrates a communication node being either; an integrated part of the utility meter sharing elements such as the micro controller unit or a unit external to the utility meter.

### DETAILED DESCRIPTION OF AN EMBODIMENT

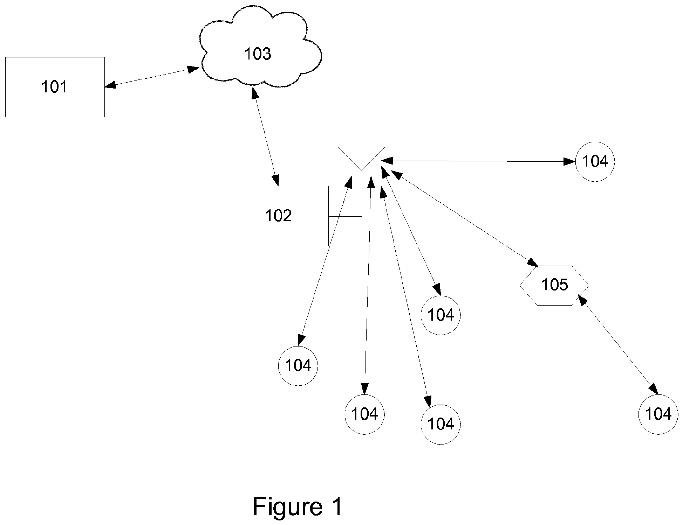

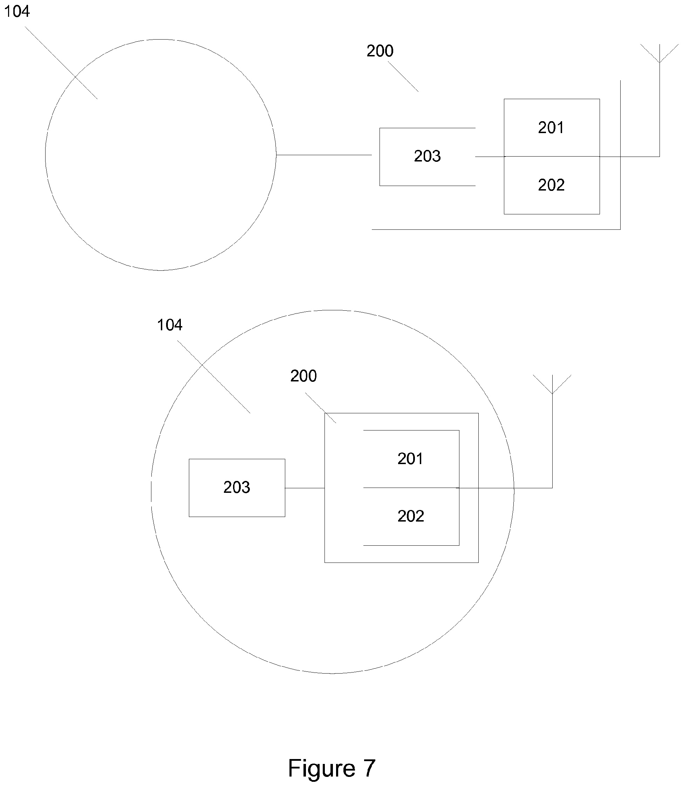

In figure 1 an advanced metering infrastructure (AMI) system is shown. The system includes a headend system 101 providing interfaces for accessing the AMI system. The headend system 101 is connected to the Data Collecting Unit (DCU) 102 through the internet 103, using third party communication infrastructures e.g. a cellular network, cable modems or other infrastructures. The DCU 102 communicate to the utility meters 104 using a communication node configured to take part in the RF based AMI system. The RF network is arranged in a star topology in which the DCU 102 communicates directly to the utility meter 104, which are also comprising a communication node. Repeaters 105 might however be used to extend the communication range between two communication nodes by including the communication node of the repeater 105 as an intermediate node. All devices being a part of the AMI includes a communication node 200. The communication node 200 might be embedded in the device or an external device as illustrated in figure 7. The communication node 200 includes a receiver 201 and a transmitter 202 and a Micro Controller Unit 203 (MCU) that might be shared with the device in which it is embedded.

The type of modulation used in the system is Frequency Shift Keying (FSK). The waveform of the modulated signal is Gaussian shaped thus denoted Gaussian FSK (GFSK). The Gaussian shaping is done to reduce the occupied bandwidth of the transmitted signal. The FSK modulation use a number of symbols also called M-ary FSK modulation. 2-FSK is thus a FSK signal modulated with 2 symbols while 4-FSK is a FSK signal modulated with 4 symbols.

Communication between communication nodes in the AMI system is by default performed using a 4-GFSK modulation with a symbol rate of 4,8 ksps. Since two data bits can be mapped by each symbol using a 4-GFSK modulation the resulting data rate is 9,6 kbps.

When the DCU 102 whish do increase link budget this can be done by changing the modulation scheme from a 4-GFSK to a 2-GFSK modulation. Maintaining the symbol rate and maximum deviation of the modulated signal this will result in an improvement of the link budget by a maximum of 5,5 dB while decreasing data rate by a factor of two causing a doubling of the transmission duration.

The communication node receiving the transmission from the DCU 102 is however by default expecting a 4-GFSK modulated signal and is configured for receiving only a 4-GFSK signal. Since the communication node is a low cost battery operated device, equipped with a standard low cost energy efficient transceiver, only one type of modulation can be received at a time. An advanced receiver e.g. a Software Defined Radio (SDR) would be able to receive multiple RF channels utilizing different modulation schemes simultaneously; this would however not be feasible for a communication node embedded in a utility meter 104 due to increase in component cost and energy consumption.

In the communication node of the utility meter 104 a low cost standard transceiver is used e.g. CC12xx or CCllxx series from Texas Instruments or Spirit2 from STMicroelectronics. The transceiver is controlled by a MCU 203 and demodulated data bits are transferred from the transceiver to the MCU 203 for further processing.

The receiver 201 in the communication node would thus receive the received signal as a 4-GFSK signal as this is the default selection and the receiver 201 is thus configured for receiving a 4-GFSK signal. Receiving a 2-GFSK signal as a 4-GFSK signal would lead to incorrect sequence of data bits sent to the MCU 203. The MCU 203 would thus be unable to interpret the data packed constituted by the data bits. However, by letting the MCU 203 do a symbol remapping from the received 4-GFSK symbols to the transmitted 2-GFSK symbols before interpreting the data packed constituted by the received data bits, a correct reception of the 2-GFSK signal is obtained.

In this way a standard low cost transceiver can be used for seamless switching between reception of more M-ary modulated RF signals with different values of M. There is thus no need for informing the receiving communication node about the changed value of M since no reconfiguration of the transceiver is required. This is eliminating negotiation processes or mode change commands between the transmitting node and the receiving node enabling a seamless change in modulation parameter.

In thus embodiment, the transceiver is configured by the MCU 203 to receive a 4-GFSK signal, while the signal transmitted to the receiver 201 might be either a 2-GFSK or a 4-GFSK signal. The MCU 203 will when a data frame is received determine the type of modulation and do a symbol mapping if required.

The reception is started by the MCU 203 configuring the transceiver to receive a 4-GFSK signal and requesting the transceiver to start the reception by searching for synchronization.

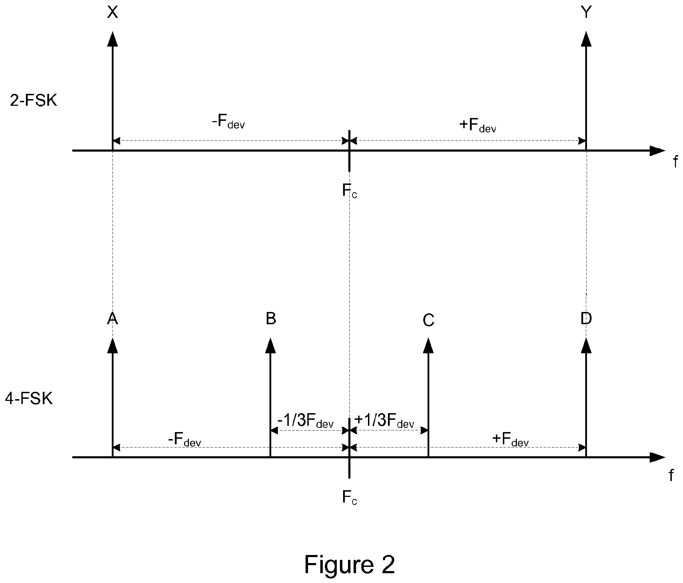

In figure 2 the mapping of the 4-GFSK symbols and 2-GFSK symbols is shown. Figure 2 show the constellation of the FSK signals in the frequency domain where the unit on the axis is frequency denoted f and F_{c} denotes the centre frequency of the signal. -F_{dev} and +F_{dev} denotes the deviation of the 2-GFSK symbols X and Y and the 4-GFSK outer symbols A, D. The deviation is the frequency offset between the F_{C} and the symbols. As also can be seen from figure 2 the deviation of the 4-GFSK symbols C and D is one third of F_{dev} denoted as -1/3F_{dev} and + 1/3F_{dev}. As can be seen from figure 2 the two symbols of the 2-GFSK modulation X and Y are at the same position as the two outer symbols of the 4-GFSK modulation A and D. This is the case since the modulation index of the 2-GFSK signal is chosen so that the deviation of the 2-GFSK signal matches the deviation of the two outer most 4-GFSK symbols A and D. A 2-GFSK signal received as a 4-GFSK signal will thus be interpreted as a sequence of the 4-GFSK symbols A and D. This is however only the case in an ideal situation. Since the RF channels are inherently noisy the received 2-GFSK signal would not only result in the symbols A and D but also symbols B and C. An algorithm for distinguishing a 2-GFSK signal from a 4-GFSK signal as well an algorithm for translating from 4-GFSK symbols to 2-GFSK symbols need to compensate for this.

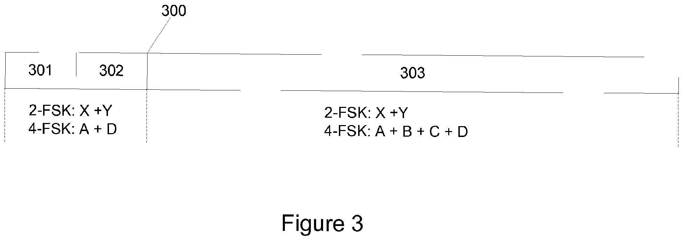

Figure 3 illustrates a typical RF data frame 300 starting with a preamble 301 followed by a synchronization word 302 where after the data symbols 303 are transmitted. The purpose of the preamble 301 is symbol synchronization while the synchronization word 302 ensures frame alignment and is used for triggering of the data reception. Since low cost transceivers often are limited to looking for a single synchronization word 302, the same synchronization word 302 is selected of the 2-GFSK and 4-GFSK modulated signals. Since only symbol A and D can be mapped directly to the 2-GFSK symbols X and Y, as shown in figure 2, the synchronization word 302 is limited to use the two outer symbols A and D. The same applies to the preamble 301 which is limited to use the two outer symbols A and D. Selecting the preamble 301 and synchronization word 302 in accordance with these restrictions, a low cost transceiver will achieve correct synchronization no matter if the received signal is 2-GFSK or 4-GFSK and no matter which of the two modulations the transceiver is configured to receive.

As an alternative to using a single synchronization word 302, different synchronization words for 2-GFSK and 4-GFSK may be selected. The two synchronization word2 302 shall however comply with the rules described above limiting the used symbols to be the outer symbols A, D or X, Y. In this case the transceiver can differentiate between a 2-GFSK signal and a 4-GFSK signal by analysing the synchronization word 302. This means that the modulation is determined by the synchronization word 302.

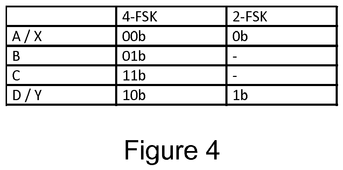

After successful synchronization, the transceiver starts to receive the data symbols 303 and translating them into data bits. Translation from symbols to data bits is illustrated in figure 4. The data bits are transferred to the MCU 203. This is done by the MCU 203 communicating with the transceiver through one of the transceivers control interfaces. The MCU 203 is programmed to after receiving the data bits; in a first step identify the type of modulation as being 4-GFSK or 2-GFSK and in a second step interpret the received data bits in accordance with the identified modulation type.

Before the MCU 203 can determine the modulation type and interpret the received data, the first step is to convert the received data bits back into 4-GFSK symbols. This is done using the table in figure 4.

Since the receiver 201 is configured to receive a 4-GFSK signal all the symbols A, B, C, D should be present in the received signal if it is a 4-GFSK modulated signal. If the received signal is a 2-GFSK signal only symbols A and D, which are identical to symbol X and Y, should be present in the signal. The MCU 203 uses these characteristics to determine the type of modulation by the MCU 203. However exceptions from the before mentioned characteristics will occur in the non-ideal situation in which the received signal is corrupted by noise and in the case not all symbols are used in the transmitted signal.

To overcome the problem of determining the modulation type when not all symbols are equally present in the received signal the MCU 203 determines the modulation type by analysing a part of the data frame in which data is whitened. The data frame contains a sequence data being encrypted by an AES 128 algorithm. This sequence of data will with a very high probability appear to be whitened due to the nature of the AES 128 algorithm. Alternatively a whitening algorithm can be applied to parts of the data frame or the entire data frame. Whitening is a technique well-known to the skilled person. As an alternative to whitening, the MCU 203 determines the modulation type by analysing a sequence of the data frame, which is known to have all symbols present. An example of such a sequence could be a start of frame field or other data elements deliberately coded to ensure presence of all symbols. Such a sequence does however have the drawback of lowering the entropy of the transmitted signal and thus influencing the transmission duration and energy consumption negatively.

To overcome the problem of determining the modulation type when the received signal is corrupted by noise the MCU 203 use statistical methods for determining the modulation type. If data is whitened, all symbols are expected to be equally present. In a 4-GFSK signal the two inner symbols B and C is expected to account for 50% of the symbols and the outer symbols A and D is expected to account for another 50%. In a 2-GFSK signal the two outer symbols A and D are expected to account for 100%. Due to the presence of noise in the radio channel, some symbols will be corrupted. A 2-GFSK signal received with noise or with a signal power approaching the thermal noise floor would thus when received with a transceiver configured for 4-GFSK be detected to consist not only of the symbols A and D but also B and C. The algorithm determining the modulation type will thus evaluate the received signal to be a 2-GFSK modulated signal when less than a share threshold of the symbols are the symbols B and C. The share threshold can be in the range from 1% to 49%. The share threshold is set with respect to the number of symbols used to do the estimate and the acceptable probability to have a false positive detection of a signal being 2-GFSK modulated. A typical share threshold for a low probability of a false positive detection would be 5% or 10%. A balanced probability of a false positive detection will be achieved by selecting a share threshold of 15%, 20%, 25%, 30% or 35%. A high probability of false positive detections will be achieved by selecting a share threshold value of 40% or higher.

As an alternative to analysing the received symbols to determine the modulation an additional header can be added to the frame. The header shall be added between the synchronization word 302 and the data bits. The header shall always be 2-GFSK modulated and contain information regarding the modulation used for the remaining part of the frame. The 2-GFSK header could include other information as well e.g. information on the type of the frame or the type of coding used.

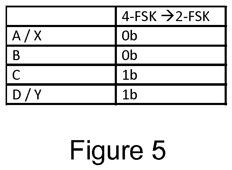

After determining the type of modulation the received symbols is converted to data bits by the MCU 203. In the case of a 4-GFSK modulated signal the conversion is very simple and a direct conversion from symbols to bit can be performed in accordance with a table as shown in figure 4. Alternatively the original received data bit sequence from the transceiver is used directly. In the case where a 2 GFSK signal is detected a decision needs to be taken for the error induced symbols B and C while the symbols A and D is directly converted into the binary data bit value 0b and 1b respectively. The symbols B and C is mapped by the MCU 203 to the closest valid symbol for the modulation type. This means that the symbol B is converted to the binary data bit value 0b and symbol C is converted to the binary data bit value 1b. The mapping of the symbols can be seen in figure 5.

After the MCU 203 has mapped the received symbols to data bits the MCU 203 interprets the received data frame. The data frame is a layered structure consisting at least of a link layer and an application layer or equivalent structures. The data frame might be further encoded e.g. with a Forward Error Correction algorithm.

When changing modulation from 4-GFSK to 2-GFSK maintaining the signal bandwidth and symbol rate the transmitted energy per bit is doubled. This is effectively increasing the received energy per data bit related to the noise energy E_{b}/N₀ by 3 dB. Further the required Signal to Noise Ratio (SNR) to obtain a given bit error rate is lower for a 2-GFSK signal than for a 4-GFSK signal, this difference is app. 2,5 dB. Thus using an ideal receiver the link budget is expected to improve app. by 5,5 dB. Receiving a 2-GFSK signal with a low cost standard transceiver configured for receiving a 4-GFSK signal it would however not be expected to gain the same improved sensitivity. The effect of the best performing embodiments is however that this is achieved with a margin of less than 0,5 dB. Thus a standard low cost transceiver without the same flexibility as high end receivers can effectively provide the dynamics in link budget desired in a two-way AMI system.

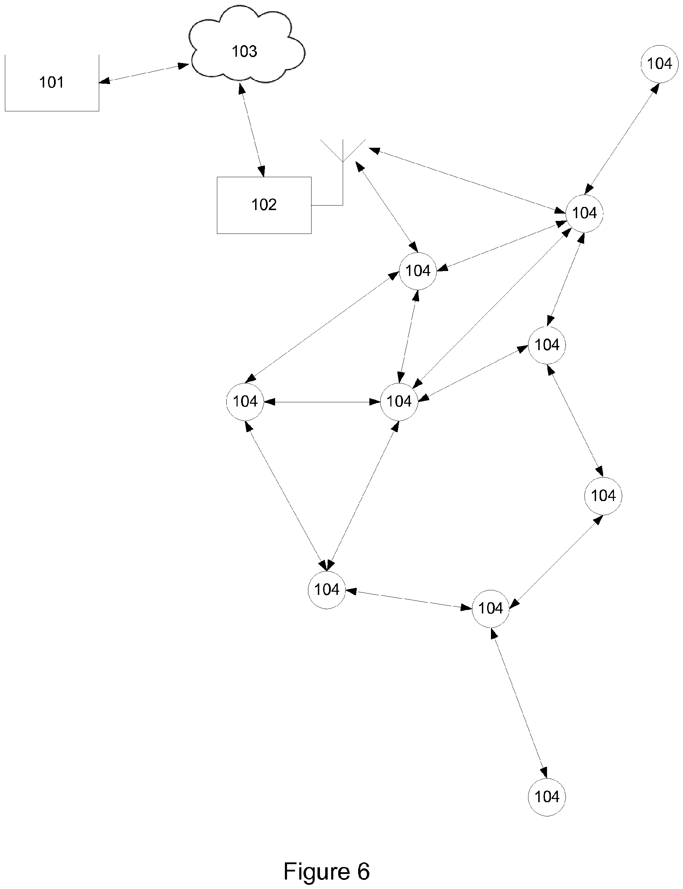

In an alternative embodiment of the invention, seamless change of modulation is done in an AMI network providing a mesh topology. In a mesh network data frames are routed via a multi-hop path between the DCU 102 and multiple communication nodes embedded in the utility meters 104, this is illustrated in figure 6. The default communication setup is a 4-GFSK modulation. However the receivers 201 of the intermediate communication nodes are able to simultaneously receive a 2-GFSK modulated data frame using the above disclosed method. When routing a data frame from one intermediate node N1 to another node N2 the data transfer is initiated using the default 4-GFSK modulation. The receiving node N2 sends an acknowledge frame to the transmitting node N1 after having verified correct reception of the data frame being routed. If the node N1 does not receive an acknowledge frame from the node N2 it is expected that the routed frame has not been correct received by N2 and N1 will do a retransmission in accordance with a retransmission scheme. The retransmission scheme will include one or more of the following information; the number of retransmissions to be performed, the communication parameters to be used during the retransmission, timing related to the retransmission and message reporting in case of a routing error. Node N1 will use the 2-GFSK modulation supported by N2 to do the retransmission. Doing the retransmission using the 2-GFSK modulation has the advantage that the increased link budget using 2-GFSK modulation over 4-GFSK modulation increases the probability that the retransmitted data frame is received by N2. This seamless change of modulation, without any need for a negotiation process or mode switch command, between node N1 and N2 is only possible due to the fact that the intermediate nodes are able to simultaneously receive data frames using both modulations.

To optimize the routing efficiency the node N1 implements an algorithm adapting the choice of modulation to match the path loss of the RF link between N1 and N2. Node N1 will maintain statistics of the communication errors, when transmitting frames from N1 to N2 and all other next hop nodes. The statistics can be a part of the routing table or in a dedicated table in case of a source routed system. Node N1 can choose to increase the link budget for the initial communication with N2 if the statistics shows that retransmissions will be required using a lower link budget. In this way an intermediate node use historical Packet Error Rates (PER) to optimize routing efficiency by adjusting the link budget of each transmission. The intermediate node selects the modulation to adapt the link budget to the expected path loss.

A data packet being routed through the mesh network will thus adapt the modulation for each hop throughout the route if needed. Due to the seamless change of modulation the routing efficiency will not be decreased by adapting the link budget to match the path loss for each hop on the route. When larger amounts of data need to be transferred between two communication nodes the transmitting node can select a high data rate modulation to minimize the total transfer time. During a longer communication session the path loss might change and a change in link budget during the session is thus required. The seamless change of modulation type allows the transmitting node change the modulation during a communication session without notifying the receiving node.

In yet another embodiment an M-ary modulation with another value of M than M=4 is used for the default setup. Other values of M could be between 4 and 64, usually M is a power of 2, in this way each symbol represents log₂M bits. The method of determining M of the received signal by letting the MCU 203 apply statistical methods to the received data bits can by the skilled person easily be extended from the previous disclosed embodiment in which M=4 was used as the default value. In the same way the skilled person will be able to apply the teaching in the previous embodiment enable; the conversion of received data bits to symbols for the default M value, decision of symbols for the determined value of M and conversion of symbols into data bits according to the determined value of M. However to use the same method it is a requirement that the default value of M is larger than the determined value of M. Further it is a requirement that there is an overlap of the symbols in the constellation diagrams for the default value of M and the determined value of M. It is a requirement that all symbols present in the constellation diagram for the signal with the determined value of M is also present in the constellation diagram for the signal with the default value of M. In an example the default value of M is M=8 and the determined value is M=2. Embodiments of the disclosed invention can by the same means described above be extended to operate with more than two values of M. An example of a multi-level setup is a setup in which the default value of M=8 and the determined values of M is M=4 or M=2. In this setup it is a requirement that there is an overlap of the symbols in the constellation diagrams for the default value of M and the two determined values of M. It is however not a requirement that there is an overlap between the symbols in the two determined values of M.
Other forms of modulation can be used e.g. a Phase Shift Keying (PSK) might be used or Amplitude Shift Keying (ASK) or combinations. The disclosed method is thus not limited to FSK modulation since the method is applied to the data bits as received after demodulation. As long all symbols in the signals with the determined value of M coincidence in the constellation diagram with symbols of the signal with the highest value of M the disclosed method is applicable.

In yet another embodiment the further processing of the received data bits includes a step of correcting bit errors induced by noise or interference in the communication channel. Correction of bit errors can be performed by applying a Forward Error Correction (FEC) algorithm. Such FEC algorithms like a Turbo coding or Low Density Parity Check (LDPC) do benefit from information on the probability that the data bits are erroneous. Such information is obtained during the process of mapping the symbols of the received signal first to valid symbols and second to data bits. Received symbols that are not valid for the determined value of M are converted to the closest valid symbol in the constellation diagram. The distance from the received invalid symbol to the closest valid symbol in the constellation diagram can be used to determine the probability that the symbol and thus the resulting data bits are erroneous. This information can be fed into the FEC algorithm to improve the ability of the algorithm to correct errors.

## Claims

1. A communication node (200) for communicating data to and from utility meters (104) in an Advanced Metering Infrastructure (AMI), the communication node comprising;
- a radio including a transmitter (202) and a receiver (201),
- a Micro Controller Unit (MCU) (203) for controlling the radio,
wherein the MCU (203) is adapted to;
- setup the radio to operate in a RF communication channel,
- request the receiver (201) of the radio to start reception of M-ary modulated RF signals where M=K and generate demodulated data bits,
- receive from the radio the demodulated data bits,
**characterized in**
the MCU (203) is configured to;
- analyse the demodulated data bits to determine if M of the received RF signal is K or L where K > L,
- if M of the received RF signal is determined to be K use the demodulated data bits as received from the radio for further processing,
- if M of the received RF signal is determined to be L convert the demodulated data bits to demodulated data bits of an L-ary modulated signal before further processing.

2. A communication node according to claim 1, wherein the modulation used is Frequency Shift Keying (FSK) or Gaussian shaped FSK (GFSK).

3. A communication node according to any of the previous claims, wherein MCU (203) is configured to determine if the received RF signal is a K-ary or L-ary modulated RF signal by use of statistical methods.

4. A communication node according to any of the previous claims, wherein the RF receiver (201) is setup to synchronize on a synchronization word (302) where all symbols are the outer symbols of a K-ary FSK modulated signal.

5. A communication node according to any of the previous claims, wherein the RF receiver (201) is setup to synchronize on a synchronization word (302) where all symbols are the outer symbols (A, D) of a 4-ary FSK modulated signal.

6. A communication node according to any of the previous claims, wherein the RF receiver (201) is setup receive a 4-ary FSK modulated signal wherein,
- the deviation of the outer symbols (A, D) is +/- f_{dev} and
- the deviation of the inner symbols (B, C) is +/- 1/3* f_{dev}.

7. A communication node according to any of the previous claims, where the communication node is configured for being a node in a mesh network and L-ary modulation is used in case of retransmission of a routed data frame.

8. A communication node according to any of the previous claims, where the communication node is configured for being a node in a mesh network and the decision of transmitting using K-ary or L-ary modulation is made in accordance with a retransmission scheme.

9. A communication node according to any of the previous claims, where the communication node is configured for being a node in a mesh network and the decision of transmitting using K-ary or L-ary modulation is made for each hop at least based on statistics of historical communication errors.

10. A communication node according to any of the previous claims, where the communication node is configured for being a node in network and the decision of transmitting using K-ary or L-ary modulation is made for each hop by the transmitting node.
